# FASCICULE DE BREVET EUROPEEN

(11) **EP 0 651 207 B1**
(45) Date de publication et mention de la délivrance du brevet: **25.02.1998**
(21) Numéro de dépôt: 94402401.7
(22) Date de dépôt: 26.10.1994
(51) Int. Cl.: F23R 3/04, F04D 29/54

(54) **Diffuseur comprenant trois groupes de conduits avec certaines des cloisons intégrées aux aubages redresseurs d'un compresseur**
Diffusor mit drei Gruppen von Luftzuführungskanälen wobei bestimmte Trennwände integral mit den Leitschaufeln des Kompressors ausgeführt sind
Diffuser comprising three groups of air supply channels wherein certain dividing walls are integral with guide blades of the compressor

(30) Priorité: 27.10.1993 FR 9312799
(43) Date de publication de la demande: 03.05.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Alary, Jean-Paul Daniel, F-94100 Saint Maur des Fosses (FR); Desaulty, Michel, F-77240 Vert Saint Denis (FR); Sandelis, Denis Jean Maurice, F-77370 Nangis (FR); Schroer, Pierre, D-91800 Brunoy (FR)

(56) Documents cités:
- EP-A- 0 120 173
- EP-A- 0 523 935
- CH-A- 338 058
- FR-E- 74 688
- GB-A- 1 211 534

## Description

L'invention se rapporte à un turboréacteur comportant, en succession le long de son axe de symétrie, un compresseur destiné à délivrer un air comprimé et une chambre de combustion annulaire comprenant une virole extérieure et une virole intérieure, reliées par un fond de chambre dans lequel sont montés des injecteurs de carburant et par une casquette munie d'orifices pour l'alimentation en air du fond de chambre, un diffuseur étant interposé entre ledit compresseur et ladite chambre, à distance de cette demière, et étant destiné à diminuer la vitesse d'écoulement du flux d'air provenant du compresseur, ladite casquette séparant le flux d'air délivré par ledit diffuseur en un flux Fo alimentant le fond de chambre, un flux Fe de contournement sur la virole extérieure et un flux Fi de contournement sur la virole intérieure.

Dans un turboréacteur, le diffuseur se situe en amont de la chambre de combustion annulaire, qu'elle soit simple ou à double tête, et en aval du compresseur haute pression.

Ce diffuseur a pour rôle de diminuer la vitesse d'écoulement des gaz provenant du compresseur. Ce ralentissement permet de diminuer les pertes de charge et d'alimenter correctement en air le fond de chambre comportant les injecteurs de carburant.

Dans le cas d'une chambre de combustion à deux têtes, le diffuseur peut comporter un séparateur de flux annulaire, ce qui permet, pour l'air, un meilleur contournement de la casquette vers la virole inteme et la virole externe. Ces flux de contournement sont destinés au refroidissement et à l'alimentation des zones primaires et de dilution.

On connait par CH 338 058 une chambre de combustion associée à un collecteur annulaire et des passages amenant l'air du collecteur dans la chambre de combustion et dans les chemises d'air intérieure et extérieure qui entourent la chambre, respectivement, chacune étant alimentée par un conduit distinct de chacun des groupes de conduits qui composent les passages. En variante, un conduit intermédiaire a une forme annulaire et une section transversale de forme ondulée ou équivalente.

Le but de la présente invention est de proposer une disposition particulière de diffuseur qui permette de limiter les pertes de charge de contournement dues aux décollements, à la presence des injecteurs et aux déviations brusques, en organisant favorablement les écoulements en amont des contournements, et qui puisse être utilisé aussi bien sur une chambre simple que sur une chambre à deux têtes.

Comme il est connu le diffuseur comporte une sortie non circulaire, dans laquelle débouche une pluralité de conduits sépares par des cloisons radiales, lesdits conduits étant répartis raaialement en trois groupes de conduits délivrant des flux d'air sensiblement égaux respectivement aux flux Fi, Fo et Fe, les conduits de chaque groupe délivrant des flux élémentaires, répartis circonférentiellement et dirigés vers les zones à alimenter de la chambre de combustion.

Selon l'invention, certaines des cloisons radiales sont intégrées aux aubages redresseurs du compresseur.

Le diffuseur peut ne comporter qu'un seul conduit entre deux cloisons successives, ou deux conduits divergeant radialement et séparés par un coin séparateur.

Les nombres de conduits des trois groupes de conduits peuvent être égaux ou différents. Ils sont de préférence égaux au nombre d'injecteurs de chaque tête ou un multiple de ce nombre.

Dans une forme de réalisation préférée, le diffuseur a une sortie de forme globalement sinusoïdale, délimitée par une paroi intérieure et une paroi extérieure reliées par les cloisons radiales.

Grâce à cette disposition, les jets d'air sont dirigés vers les zones à alimenter et ne frappent pas directement la casquette, ni les rampes d'alimentation en carburant des injecteurs, ce qui diminue considérablement les pertes de charge dues aux contoumements de la casquette dans les turboréacteurs actuels, notamment dans les turboréacteurs à double tête.

D'autres particularités et avantages de l'invention ressortiront de la description qui va suivre, en regard des dessins annexés, d'exemples de réalisation non limitatifs.

La figure 1 représente schématiquement, en coupe par un plan radial, le diffuseur de structure classique, ainsi que la chambre de combustion à double tète située en aval.

La figure 2 montre, en perspective, une portion de diffuseur selon un premier mode de réalisation.

La figure 3 represente, en coupe par un plan radial, le diffuseur de la figure 2.

La figure 4 represente, en correspondance et décalées l'une par rapport à l'autre par souci de clarté, une vue axiale de l'arnère du diffuseur de la figure 2, et, en dessous, une vue axiale de l'avant de la chambre de combustion.

La figure 5 represente une coupe par un plan radial, d'un diffuseur selon un deuxième mode de réalisation.

La figure 6 représente, comme la figure 4, des vues axiales décalées du redresseur et de la chambre de combustion, selon le deuxième mode de réalisation.

La figure 7 montre, en coupe par un plan radial, une variante du deuxième mode de réalisation.

La figure 8 est une vue axiale de l'arrière du diffuseur de la figure 7.

La figure 9 représente en perspective une portion de diffuseur, selon un mode de réalisation préférée.

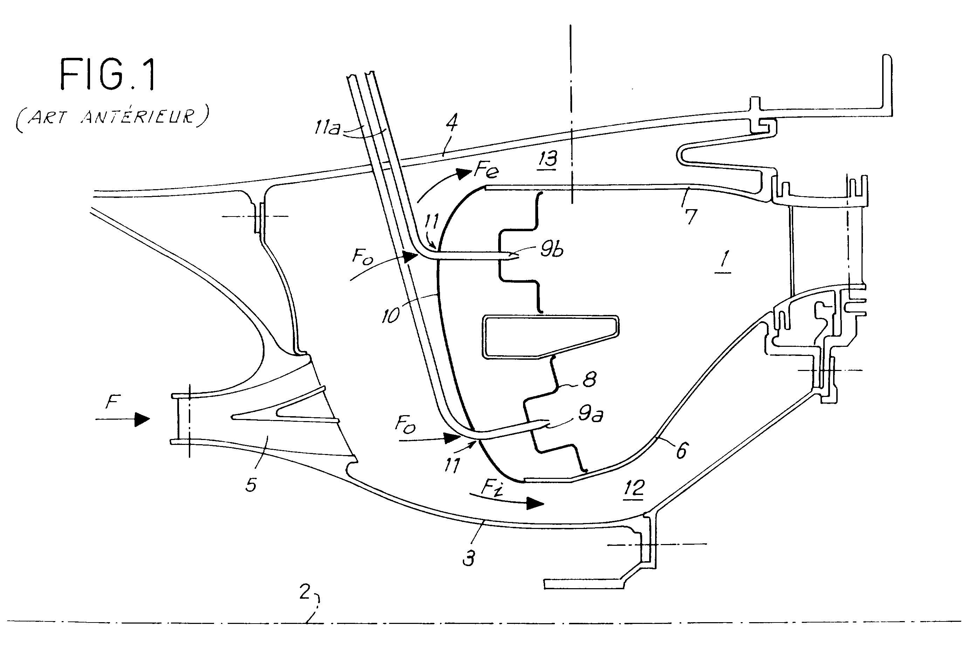

On voit sur la figure 1 la chambre de combustion annulaire 1 à double tête d'un turboréacteur d'axe longitudinal 2. La chambre de combustion est disposée dans l'espace annulaire délimité par un carter intérieur 3 et un carter extérieur 4 se raccordant à un diffuseur 5 annulaire, disposé en aval d'un compresseur haute pression non représenté qui délivre un flux d'air comprimé F. La chambre de combustion 1 est délimitée par une virole intérieure 6, une virole extérieure 7 et un fond de chambre 8 reliant les viroles 6 et 7 et dans lequel sont montés les injecteurs de la tête de ralenti 9a et les injecteurs de la tête de décollage 9b.

Une casquette 10, comportant des orifices 11 pour le passage de l'air alimentant le fond de chambre 8 et des rampes d'injection de carburant 11a, relie les viroles 6 et 7 en amont du fond de chambre 8. Cette casquette 10, disposée en aval du diffuseur 5 et à distance de ce dernier, permet de séparer l'air en provenance du diffuseur 5 en un premier flux Fo pénétrant par les orifices 11 et destiné à alimenter le fond de chambre 8, en un deuxième flux Fi contournant la casquette 10 et dirigé dans l'espace annulaire 12 séparant le carter intérieur 3 et la virole intérieure 6, et en un troisième flux Fe dirigé vers l'espace annulaire 13 séparant le carter extérieur 4 et la virole extérieure 7. Les flux Fi et Fe sont destinés à refroidir les viroles 6 et 7 et à alimenter les zones primaires et de distribution de la chambre de combustion 1. Un séparateur annulaire 14 est disposé dans le diffuseur 5, notamment dans le cas d'une chambre de combustion à deux têtes. Le séparateur 14 crée, à partir du flux d'air F en provenance du compresseur, deux flux à destination respectivement de la tête de décollage 9a et de la tête de ralenti 9b.

Selon la présente invention, le diffuseur 5 est une pièce annulaire, dont la partie amont 15 est de forme circulaire et dont la partie aval 16 est, en revanche, de forme non circulaire. Cette pièce comporte une pluralité de conduits 18 séparés par des cloisons radiales 17. Ces conduits 18 délimités circonférentiellement par des parois intérieure 19a et extérieure 19b, et éventuellement par des coins séparateurs 20, permettent de segmenter le flux d'air F en provenance du compresseur en des flux d'air élémentaires répartis circonférentiellement, ainsi que radialement en cas de présence de coins séparateurs 20. Ces flux d'air sont déviés par rapport à l'axe 2 de la turbomachine en fonction de l'inclinaison donnée à chacun de ces conduits 18.

Les conduits 18 sont répartis radialement en trois groupes de conduits selon leur inclinaison par rapport à l'axe 2.

Les conduits 18a du premier groupe de conduits sont dirigés vers les orifices 11 de la casquette 10 et délivrent ensemble un flux d'air sensiblement égal au flux Fo nécessaire pour l'alimentation du fond de chambre 8.

Les conduits 18i du deuxième groupe de conduits sont inclinés, de l'amont vers l'aval, vers l'axe 2 du turboréacteur et dirigent les flux d'air qu'ils délivrent directement vers l'espace annulaire intérieur 12. Le débit total délivré par les conduits 18i est sensiblement égal au flux Fi.

Les conduits 18e du troisième groupe de conduits sont inclinés, de l'amont vers l'aval, vers l'extérieur, et délivrent des flux d'air élémentaires dirigés directement vers l'espace annulaire extérieur 13 et correspondant ensemble au flux Fe.

Grâce à cette disposition, les pertes de charge dues aux contournements de la casquette 10 sont notablement diminuées.

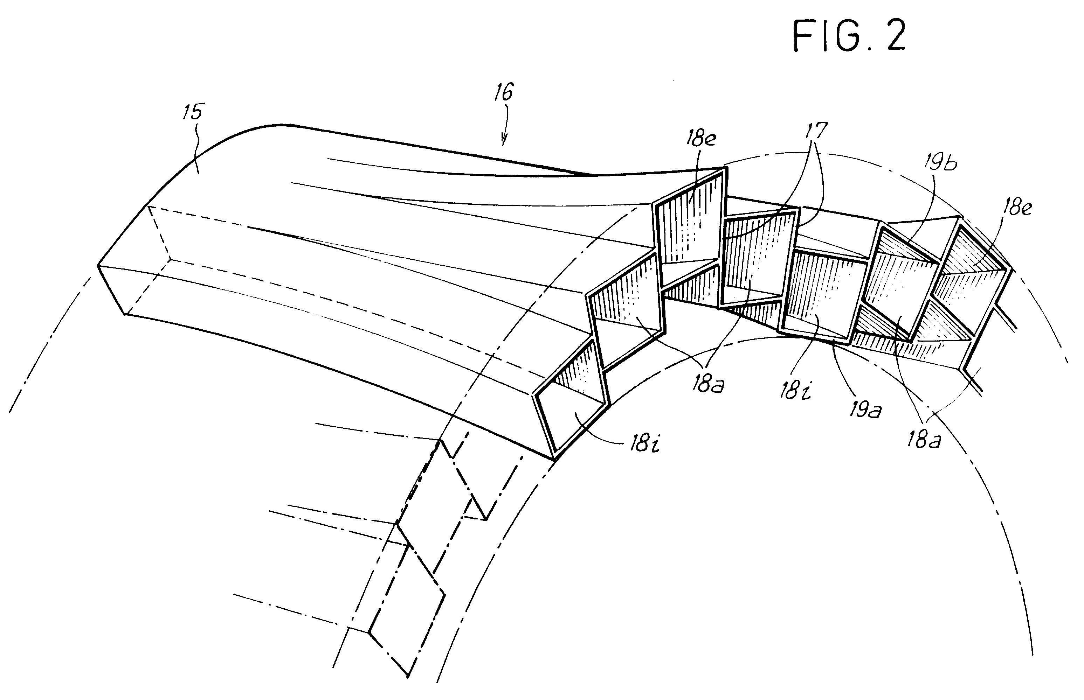

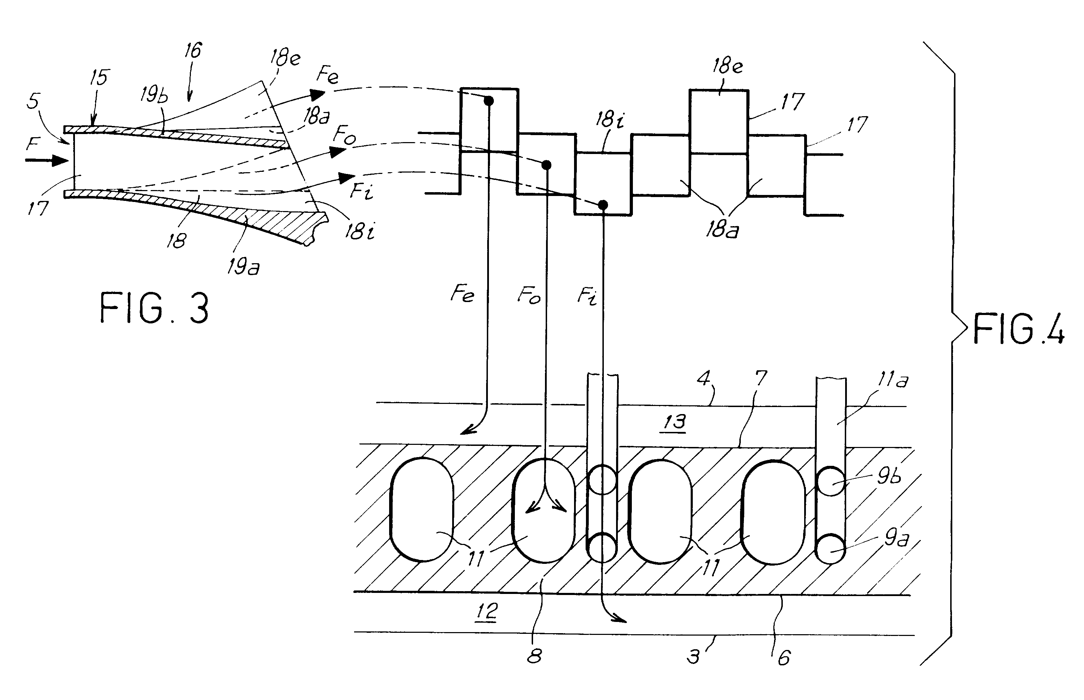

Dans le mode de réalisation représentée sur les figures 2, 3 et 4, la partie aval 16 du diffuseur 5 se présente sous forme de gradins composés de trois degrés régulièrement répartis sur la circonférence. Chaque degré forme un conduit 18 orienté axialement et éventuellement dévié radialement et qui est délimité circonférentiellement par les parois radiales 17 disposées dans le sens d'écoulement des gaz. Certaines de ces parois 17 peuvent être intégrées aux redresseurs de sortie du compresseur haute pression. Par chaque orifice de conduit sort un flux élémentaire d'air destiné à alimenter une zone circonférentielle précise située à l'amont de la chambre de combustion 6. Les conduits 18i alimentent l'espace annulaire intérieur 12. Ils sont disposés de préférence en regard des rampes 11a d'alimentation en carburant des injecteurs 9a et 9b. Les conduits 18a sont disposés en regard des orifices 11 de la casquette 10. Les conduits 18a, 18e et 18i peuvent être de section différente. Le nombre de conduits de chaque groupe est égal au nombre d'injecteurs ou est un multiple du nombre d'injecteurs installés en fond de chambre 8.

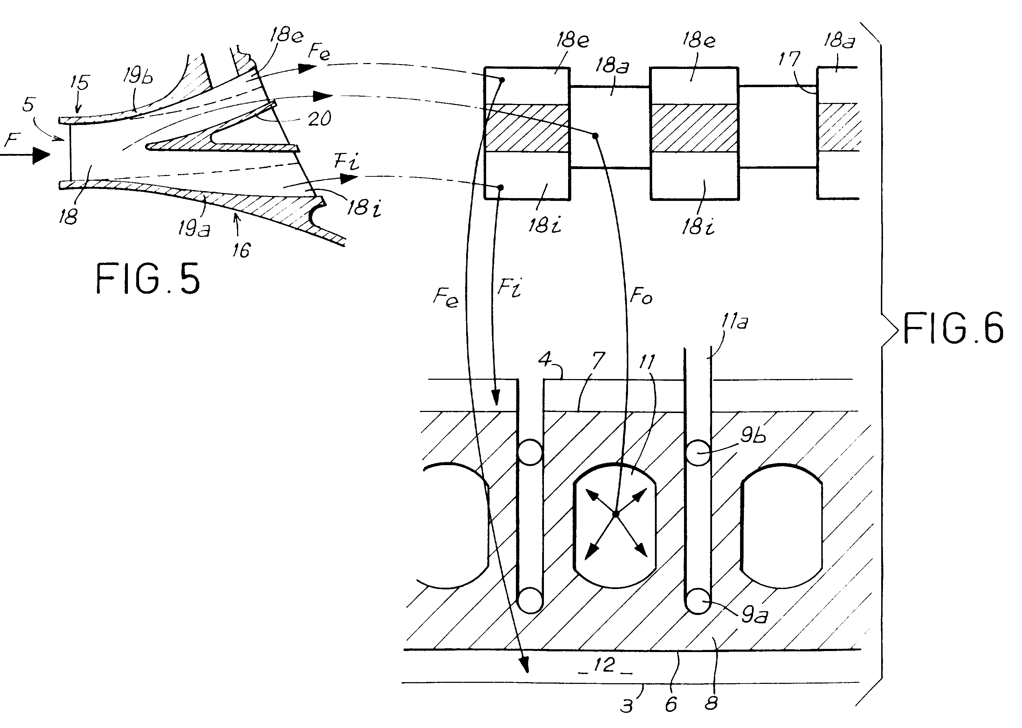

Les figures 5 et 6 montrent un diffuseur 5 qui alimente une chambre de combustion annulaire 6 à deux têtes, mais pourrait également alimenter une chambre à simple tête. Sur ces figures, on voit clairement les coins redresseurs 20 qui sont disposés entre deux cloisons radiales 17. Les conduits 18a, dirigés vers les orifices 11 de la casquette 10, alternent avec les conduits 18e et 18i radialement séparés par les coins 20.

Le flux Fo sortant des conduits 18a sert à refroidir le séparateur des gaz entre les deux têtes 9a et 9b, puis à alimenter en air les vrilles des injecteurs ainsi que les éventuels orifices de dilution d'air disposés sur le séparateur.

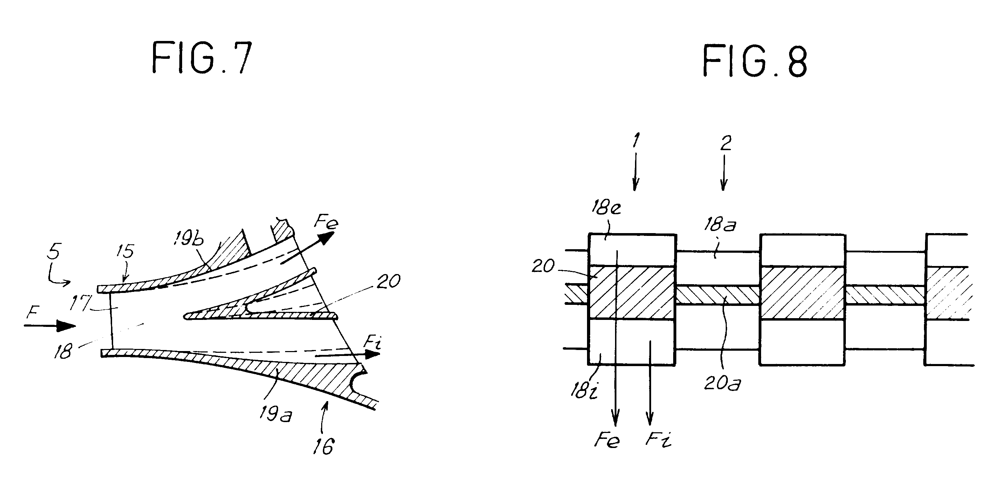

Les figures 7 et 8 montrent une variante du mode de réalisation représentée sur les figures 5 et 6, spécifique à une chambre à deux têtes. Il diffère de la version précédente par la présence d'un séparateur 20a de flux dans le conduit 18a, destiné à séparer le flux Fo en deux flux alimentant respectivement la tête de ralenti 9a et la tête de décollage 9b.

Le séparateur 20, disposé entre les conduits 18i et 18e, a un angle plus grand que le séparateur 20a.

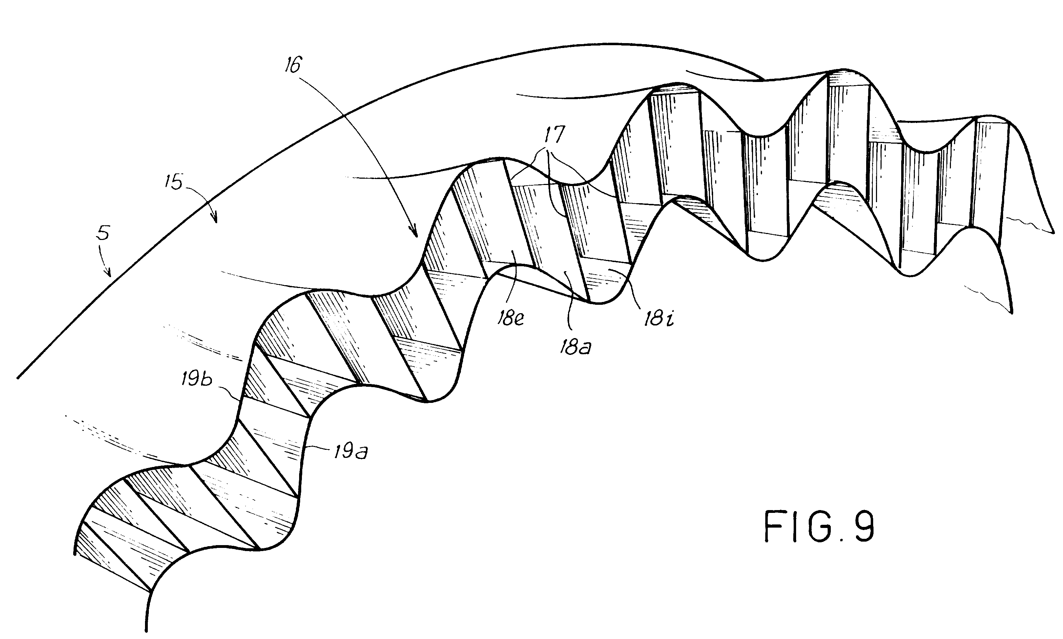

La figure 9 montre un diffuseur 5 dont la sortie a une forme sensiblement sinusoïdale au lieu de la forme en gradins des modes de réalisation décrits ci-dessus. Les parois 19a et 19b sont sensiblement parallèles en coupe axiale, et divergent sensiblement de l'amont vers l'aval. Elles sont reliées par les parois radiales 17. Ce diffuseur 5 monobloc est réalisé par coulée dans un moule approprié. Il pourrait également comporter les coins séparateurs 20 des variantes précédentes.

## Revendications

1. Turboréacteur, comportant en succession le long de son axe longitudinal de symétrie un compresseur destiné à délivrer un air comprimé F et une chambre de combustion annulaire (1) comprenant une virole extérieure (7) et une virole intérieure (6), reliées par un fond de chambre (8) dans lequel sont montés des injecteurs de carburant (9a, 9b) et par une casquette (10) munie d'orifices (11) pour l'alimentation en air du fond de chambre (8), un diffuseur (5) étant interposé entre ledit compresseur et ladite chambre (1), à distance de cette dernière, et étant destiné à diminuer la vitesse d'écoulement du flux d'air F provenant du compresseur, ladite casquette (10) séparant le flux d'air F délivré par ledit diffuseur (5) en un flux Fo alimentant le fond de chambre (8), un flux Fe de contournement sur la virole extérieure (7) et un flux Fi de contournement sur la virole intérieure (6), ledit diffuseur (5) comportant une sortie non circulaire, dans laquelle débouche une pluralité de conduits (18) séparés par des cloisons radiales (17), lesdits conduits (18) étant répartis en trois groupes de conduits (18) séparés par des cloisons radiales (17), lesdits conduits (18) étant répartis en trois groupes de conduits (18i, 18a, 18e) délivrant des flux d'air sensiblement égaux respectivement aux flux Fi, Fo et Fe, les conduits de chaque groupe délivrant des flux élémentaires, répartis circonférentiellement et dirigés vers les zones à alimenter (11, 12, 13) de la chambre de combustion (1), caractérisé en ce que certaines desdites cloisons (17) sont intégrées aux aubages redresseurs du compresseur.

2. Turboréacteur selon la revendication 1 caractérisé en ce que le diffuseur (5) comporte des conduits répartis radialement en trois groupes de conduits (18i,18a,18e) séparés par des cloisons radiales (17).

3. Turboréacteur selon la revendication 1 caractérisé en ce qu'un conduit (18a) alimentant le fond de chambre alterne avec deux conduits (18e,18i) divergents radialement entre deux cloisons successives, lesdits deux conduits étant séparés par un coin redresseur (20).

4. Diffuseur selon la revendication 1 caractérisé en ce qu'il comporte en alternance, entre deux cloisons successives, un conduit (18a) d'un premier groupe de conduits et deux conduits (18e, 18i) divergents, séparés par un coin séparateur (20) et appartenant respectivement aux deuxième et troisième groupes de conduits.

5. Diffuseur selon la revendication 1, comportant une sortie de forme globalement sinusoïdale, délimitée par une paroi intérieure (19a) et une paroi extérieure (19b) reliées par les cloisons radiales (17), caractérisé en ce qu'il est réalisé par moulage en une pièce unique.

## Patentansprüche

1. Strahltriebwerk, das entlang seiner Längssymmetrieachse aufeinanderfolgend einen Verdichter zur Lieferung von komprimierter Luft (F) und eine Ringbrennkammer (1) mit einem äußeren Mantelring (7) und einem inneren Mantelring (6) aufweist, die durch einen Kammerboden (8), in dem Kraftstoffeinspritzdüsen (9) montiert sind, und durch eine Kappe (10) miteinander verbunden sind, die mit Öffnungen (11) für die Luftzufuhr zu dem Kammerboden (8) ausgestattet ist, wobei zwischen dem Verdichter und der Brennkammer im Abstand zu letzterer ein Diffusor (5) zur Verringerung der Strömungsgeschwindigkeit des aus dem Verdichter kommenden Luftstroms F angeordnet ist, wobei die genannte Kappe (10), den von dem Diffusor (5) gelieferten Luftstrom F trennt in einen Strom Fo, der den Kammerboden speist, einen Umgehungsstrom Fe auf dem äußeren Mantelring (7) und einen Umgehungsstrom Fi auf dem inneren Mantelring (6), wobei der Diffusor (5) einen nicht kreisförmigen Ausgang besitzt, in den mehrere durch radiale Trennwände (17) voneinander getrennte Kanäle (18) münden, die in drei Gruppen von Kanälen (18i, 18a, 18e) aufgeteilt sind, die Luftströme liefern, die etwa gleich den Strömen Fi, Fo bzw. Fe sind, wobei die Kanäle jeder Gruppe, die Elementarströme liefern, über den Umfang verteilt und auf die zu speisenden Zonen (11, 12, 13) der Brennkammer (1) gerichtet sind,
**dadurch gekennzeichnet**,
daß bestimmte Exemplare der genannte Trennwände (17) in die Leitschaufeln des Verdichters integriert sind.

2. Strahltriebwerk nach Anspruch 1,
dadurch gekennzeichnet,
daß der Diffusor (5) Kanäle aufweist, die radial in drei Gruppen von Kanälen (18i, 18a, 18e) aufgeteilt sind, die durch radiale Trennwände (17) getrennt sind.

3. Strahltriebwerk nach Anspruch 1,
dadurch gekennzeichnet,
daß ein Kanal (18a), der den Kammerboden speist, zwischen zwei aufeinanderfolgenden Trennwänden mit zwei radial divergierenden Kanälen (18e, 18i) abwechselt, wobei diese zwei Kanäle durch einen Separatorkeil (20) voneinander getrennt sind.

4. Diffusor nach Anspruch 1,
dadurch gekennzeichnet,
daß er zwischen zwei aufeinanderfolgenden Trennwänden in alternierender Anordnung einen Kanal (18a) einer ersten Gruppe von Kanälen und zwei divergierende Kanäle (18e, 18i) aufweist, die durch einen Separatorkeil (20) voneinander getrennt sind und der zweiten bzw. dritten Gruppe von Kanälen angehören.

5. Diffusor nach Anspruch 1 mit einem im wesentlichen sinusförmigen Ausgang, der von einer Innenwand (19a) und einer Außenwand (19b) begrenzt ist, die durch radiale Trennwände (17) miteinander verbunden sind,
dadurch gekennzeichnet,
daß er als einstückiges Gußteil ausgebildet ist.

## Claims

1. Turbojet comprising, in succession along its longitudinal axis of symmetry, a compressor intended for supplying compressed air F and an annular combustion chamber (1) comprising an outer shroud (7) and an inner shroud (6) which are connected by means of a chamber bottom (8) in which fuel injectors (9a, 9b) are mounted, and by means of a cap (10) provided with orifices (11) for feeding air to the chamber bottom (8), a diffuser (5) being interposed between the said compressor and the said chamber (1) at a distance from the latter and being intended for reducing the flow velocity of the airstream F coming from the compressor, the said cap (10) separating the airstream F supplied by the said diffuser (5) into a stream Fo feeding the chamber bottom (8), a stream Fe passing by on the outer shroud (7) and a stream Fi passing by on the inner shroud (6), the said diffuser (5) comprising a non-circular outlet, into which open a plurality of ducts (18) separated by radial partitions (17), the said ducts (18) being distributed in three duct groups (18i, 18a, 18e) supplying substantially equal airstreams to the streams Fi, Fo and Fe respectively, the ducts of each group supplying elementary streams distributed circumferentially and directed towards the zones (11, 12, 13) of the combustion chamber (1) which are to be fed, characterized in that some of the said partitions (17) are integrated into the guide blades of the compressor.

2. Turbojet according to Claim 1, characterized in that the diffuser (5) comprises ducts distributed radially in three duct groups (18i, 18a, 18e) separated by radial partitions (17).

3. Turbojet according to Claim 1, characterized in that one duct (18a) feeding the chamber bottom alternates with two ducts (18e, 18i) divergent radially between two successive partitions, the said two ducts being separated by a guide wedge (20).

4. Diffuser according to Claim 1, characterized in that it comprises alternately, between two successive partitions, one duct (18a) of a first duct group and two divergent ducts (18e, 18i) separated by a separating wedge (20) and belonging respectively to the second and third duct groups.

5. Diffuser according to Claim 1, comprising an outlet which is of substantially sinusoidal shape and is delimited by an inner wall (19a) and an outer wall (19b) which are connected by the radial partitions (17), characterized in that it is produced in one piece by injection moulding.
